# EUROPEAN PATENT APPLICATION

(11) **EP 2 179 961 A1**
(43) Date of publication of application: **28.04.2010**
(21) Application number: 08388040.1
(22) Date of filing: 22.10.2008
(51) Int. Cl.: B67D 1/14, F16K 7/00

(54) **A valve element of a beverage dispensing assembly**

(71) Applicant: Carlsberg Breweries A/S, 1760 Copenhagen V (DK)
(72) Inventor: Rasmussen, Jan Nørrager, 3650 Øllstykke (DK); Vesborg, Steen, 2820 Gentofte (DK)
(74) Representative: Nielsen, Henrik Sten

(57) **Abstract**

A valve element (20) to be positioned in a tapping head (30) housing (32) and operated by a tap handle (34) for causing the valve element (20) to be closed in a first position of the tap handle and opened in a second position. The valve element constitutes an integrally cast and unitary elastomeric element comprising an outer part and an inner part. The inner part defines a through-going inner passage communicating with a dispensing line (10) for allowing dispensing of beverage in the second position. The outer part and the inner part define a space there between communicating with the dispensing line and being sealed off by a flexible end wall circumferentially encircling the inner passage and joining the outer part and the inner part together. The outer part is having an elastically deformable wall part allowing the outer part to be elongated when shifting the tap handle between the first position and the second position.

## Description

This invention relates to a valve element, a dispensing line, a blank for the manufacture of a valve element, methods of producing a blank and a valve element from a blank, and a beverage dispensing assembly.

The applicant company produces and sells a professional draught beer system named DraughtMaster^{™} comprising a beverage dispensing system and a chill chamber in which the keg or pack containing carbonate beer is received. The keg or pack containing carbonated beer comprises a flexible bottle or bag, which is exposed to an elevated pressure from the outside for dispensing the beer. The flexible bottle or bag is connected through a dispensing line to a shut-off valve, which is guided through a channel of the beverage dispensing system and is received within and operated by means of a tap handle of a tapping head housing for operating the shut-off valve between an open and a closed position.

In the applicant company's previously filed European patent application 07388021.3, publication no. EP 1 982 951 A1, published on 22 October 2008, and similarly in applicant's previously filed international patent application PCT/DK2008/000140 claiming priority from the above-mentioned European patent application, a technique of joining a separate valve element to a sealed-off dispensing line, after the valve element and the dispensing line have been introduced into the tapping head housing as separate elements, is described as the joining is established the first time the tap handle of the tapping head housing is moved from its closed position to its open position.

The present invention generally relates to the technical field of improving and simplifying valve elements and beverage dispensing assemblies including a valve element and a dispensing line and also relates to providing an improved valve element which is made from a minimum number of components in particular a single unitary cast elastomeric blank element.

It is therefore an object of the present invention to provide an improved valve element which is produced from a minimum number of components, in particular an integral cast, unitary structure which due to the elasticity and flexibility of the material of the unitary structure provides the sealing ability and a simple opening function by simple stretching or bending elastic and flexible elements of the unitary structure.

Furthermore, it is an object of the present invention to provide a beverage dispensing assembly, which may be joined from a valve element according to the present invention and fulfilling the above objects, and a dispensing line or alternatively to provide an integral, i.e. preassembled beverage dispensing assembly including a dispensing line joined to and fixated relative to the valve element fulfilling the above objects according to the present invention.

The above objects, the above advantage, and the above feature together with numerous other objects, advantages, and features, which will be evident from the below detailed description of the present invention, are, in accordance with a first aspect of the present invention, obtained by a valve element of a beverage dispensing assembly to be used in combination with a tapping head including a tapping head housing and a tap handle operable between a first position and a second position, the first position constituting a non-beverage dispensing position and the second position constituting a beverage dispensing position, the beverage dispensing assembly comprising two elements:
i) a dispensing line having a dispensing end and a keg connection end, and
ii) a valve element to be positioned and received in the tapping head housing and operated by the tap handle for causing the valve element to be closed in the first position of the tap handle and to be opened in the second position,
the valve element being constituted by an integrally cast and unitary elastomeric element comprising an outer part and an inner part, the inner part defining a through-going inner passage communicating with the dispensing line for allowing the dispensing of beverage in the second position of the tap handle, the outer part and the inner part defining a space therebetween communicating with the dispensing line and being sealed off by a flexible end wall circumferentially encircling the inner passage and joining the outer part and the inner part together,
the outer part having an elastically deformable wall part allowing the outer part to be elongated when shifting the tap handle between the first position and the second position,
the flexible end wall forcing the inner part to seal off the inner passage in the second position of the tap handle, and
the flexible end wall being bent into contact with an inner surface of the outer part in the second position of the tap handle for causing the inner passage to be opened by elongating the outer part and causing the inner volume of the inner space to be substantially reduced as compared to the inner volume of the inner space in the second position of the tap handle.

The valve element according to the first aspect of the present invention consequently functions as an integral pinch-off valve

Further, the above objects, the above advantage, and the above feature together with numerous other objects, advantages, and features, which will be evident from the below detailed description of the present invention, are, in accordance with a second aspect of the present invention, obtained by a valve element of a beverage dispensing assembly to be used in combination with a tapping head including a tapping head housing and a tap handle operable between a first position and a second position, the first position constituting a non-beverage dispensing position and the second position constituting a beverage dispensing position, the beverage dispensing assembly comprising two elements:
i) a dispensing line having a dispensing end and a keg connection end, and
ii) a valve element to be positioned and received in the tapping head housing and operated by the tap handle for causing the valve element to be closed in the first position of the tap handle and to be opened in the second position,
the valve element being constituted by an integrally cast and unitary elastomeric element comprising an outer part and an inner part, the inner part defining a through-going inner passage communicating with the dispensing line for allowing the dispensing of beverage in the second position of the tap handle, the outer part and the inner part defining a space therebetween communicating with the dispensing line and being sealed off by a flexible end wall circumferentially encircling the inner passage and joining the outer part and the inner part together,
the outer part having an elastically deformable wall part allowing the outer part to be elongated when shifting the tap handle between the first position and the second position, and
the outer part having an inner circumferential bead located in the space, the inner part having an outer circumferential bead located in the space for cooperating with the inner circumferential bead for elastically deforming the inner part into sealing off the inner passage in the first position of the tap handle and for causing the inner passage to be opened by elongating the outer part and separating the inner and outer circumferential beads from one another in the second position of the tap handle.

A characterising feature of the valve element according to the first and the second aspect of the present invention is the simplicity of the valve element as the valve element is in itself established by an integrally cast and unitary elastomeric structure which has inherent elastic and flexible properties and consequently provides the shifting from the first position to the second position, or alternatively from the second position to the first position by the elasticity or flexibility of the unitary elastomeric structure or element. As distinct from the prior art valve elements which in many instances have been provided as a multiple component structure resembling the check valve of a "Gardena^{™"} type coupling, the unitary elastomeric structure according to the first and the second aspect of the present invention simplifies the overall technique of assembling the valve element and in addition to a substantial extent eliminates the risk of malfunction of the valve element by incorrect assembling of the multiple individual components or elements from which the prior valve elements are assembled simply due to the fact that all elements for the fixation of the valve element, for the shifting of the valve element and for the closing and opening valve elements are integrally included in the integral cast and unitary elastomeric structure or element.

According to two different embodiments of the valve element according to the first and second aspect of the present invention, the valve element is joined to the dispensing line prior to positioning the valve element in the tapping head, or alternatively, the valve element constitutes, prior to positioning the valve element in the tapping head housing, a separate element separated from the dispensing line, the dispensing line being sealed at the dispensing end by a sealing closure prior to positioning the valve element in the tapping head housing, and the dispensing line and the valve element, when positioning the valve element in the tapping head housing being connected together by operating the tap handle from the first position to the second position causing the sealing closure and the dispensing end of the dispensing line to be opened and at the same time causing the dispensing line to be irreversibly joined to and arrested relative to the valve element.

It is contemplated that the integral cast and unitary elastomeric structure or element characteristic of the valve element according to the first and the second aspect of the present invention may be cast in numerous configurations providing the advantages of the unitary elastomeric element characteristic of the present invention, however, according to a particular aspect of the present invention, the outer part and the inner part are initially cast in an elongated configuration in which the outer part and the inner part are joined through the flexible wall and are converted into the valve element through eversion of the inner part into the outer part.

In this highly advantageous eversion embodiment, the two parts, i.e. the first or outer part and the second or inner part, are caused to catch into one another and lock to one another in a configuration corresponding to the first position, or alternatively the second position of the tap handle.

The shifting between the first and the second position may according to four alternative embodiments be established firstly as an elastically deformable wall part of the outer part biasing the valve element to the second position of the tap handle by elastically bending the elastically deformable wall part and being stretched when shifting the tap handle from the first position to the second position, secondly as an elastically deformable wall part of the outer part biasing the valve element to the first position and being elastically elongated when shifting the tap handle from the first position to the second position, thirdly as an elastically deformable wall part of the outer part biasing the valve element to the first position by elastically bending the elastically deformable wall part and being stretched when shifting the tap handle from the second position to the first position, and fourthly as an elastically deformable wall part of the outer part biasing the valve element to the first position and being elastically stretched when shifting the tap handle from the first position to the second position.

In the valve element according to the first aspect of the present invention, the sealing of the inner passage of the inner part is established by the flexible inner wall forcing the inner part to seal off the passage when the tap handle is in the first position, i.e. corresponding to a pinch-off valve. This function may constitute an additional sealing-off function in the valve element according to the second aspect of the present invention. Consequently, in the valve element according to the second aspect of the present invention, the flexible end wall may assist in sealing off the inner passage sealing closure constituted by an initially biased membrane.

Provided the valve element constitutes a separate element to be joined with the dispensing line at the time of positioning the valve element in the tapping head housing, the sealing closure may be constituted by an initially biased membrane which is preferably rupturable. Further, according to this embodiment of the valve element according to the first and the second aspect of the present invention constituting a separate element to be joined with the dispensing line at the time of positioning the valve element in the tapping head housing, the dispensing line preferably has a dispensing end or a keg connecting end, the dispensing line being provided at the dispensing end with a biased, rupturable sealing closure.

Preferably, the dispensing line is like the valve element according to the first and the second aspect of the present invention provided from flexible elastomeric material.

The dispensing line optionally connected to or joined to the valve element may be permanently connected to the container containing a carbonated drink. Alternatively, the dispensing line optionally connected to or joined to the valve element may be a separate component which is provided with a coupling for detachable connection to the keg or beverage container. Consequently, the dispensing line optionally connected to or joined to the valve element may constitute a lightweight, simple construction, which can easily be accommodated, stored and transported in or together with the keg or the pack. The dispensing line may be accommodated in a coiled state on top of or beneath the base of the keg or pack containing the beverage.

An operating element of the tapping head preferably comprises components or elements to which the dispensing line and the valve element are connected. The valve element may be provided with corresponding coupling components or elements and may be operated by e.g. moving it or by applying a force to it.

The valve element or the dispensing line is opened and closed by operating the handle of the tapping head, preferably by longitudinally displacing components and elements to which the valve element is connected and consequently provide an elongation of the valve element.

The above objects, the above advantage, and the above feature together with numerous other objects, advantages, and features, which will be evident from the below detailed description of the present invention, are, in accordance with a third aspect of the present invention, obtained by a blank being cast in an elongated configuration comprising a first part and a second part joined through a flexible wall, the first part constituting the outer part of the valve element and the second part constituting the inner part of the valve element and the blank being converted into the valve element by everting the first part into the second part.

The present invention further, according to a fourth and a fifth aspect of the present invention, relates to a method of producing a blank according to the third aspect of the present invention for the manufacture of a valve element according to the first or the second aspect of the present invention and of producing a valve element according to the first and the second aspect of the present invention from a blank according to the third aspect of the present invention.

Furthermore, the present invention relates to a beverage dispensing assembly comprising a dispensing line and a valve element according to the first and the second aspect of the present invention and advantageously and preferably produced in accordance with the method according to the fourth aspect of the present invention from a blank according to the third aspect of the present invention and preferably produced in accordance with the method according to the third aspect of the present invention.
Fig. 1 is a side elevating view of a prior art drink dispenser assembly named Home DraughtMaster^{™},
Fig. 2 is a perspective and partly cut-away view of a tapping rod and including a tap handle and a dispensing line of the prior art drink dispenser assembly named Professional DraughtMaster^{™},
Fig. 3a is a vertical sectional view of the tap handle also shown in Fig. 2, illustrating the tap handle in a closed position.
Fig. 3b is a vertical sectional view similar to the view of Fig. 3a and illustrating the tap handle in an open position.
Figs. 4a, 4b, 4c, 4d, 4e, 4f and 4g are schematic views of a first preferred embodiment of a valve element and a beverage dispensing assembly, and
Figs. 5a, 5b, 5c, 5d, 5e, 5f and 5g are schematic views similar to the views of Figs. 4a-4g if a second embodiment of the valve element and the beverage dispensing assembly.

Throughout the below description and in the drawings, identical components or elements present in different figures of the drawings are designated the same reference numerals, and components or elements differing from a previously described component or element, respectively, however serving basically the same functional purpose as the previously described component or element, respectively, are designated the same reference numeral as the previously described component or element, respectively, however added a marking for indicating the geometrical difference from the previously described component or element, respectively.

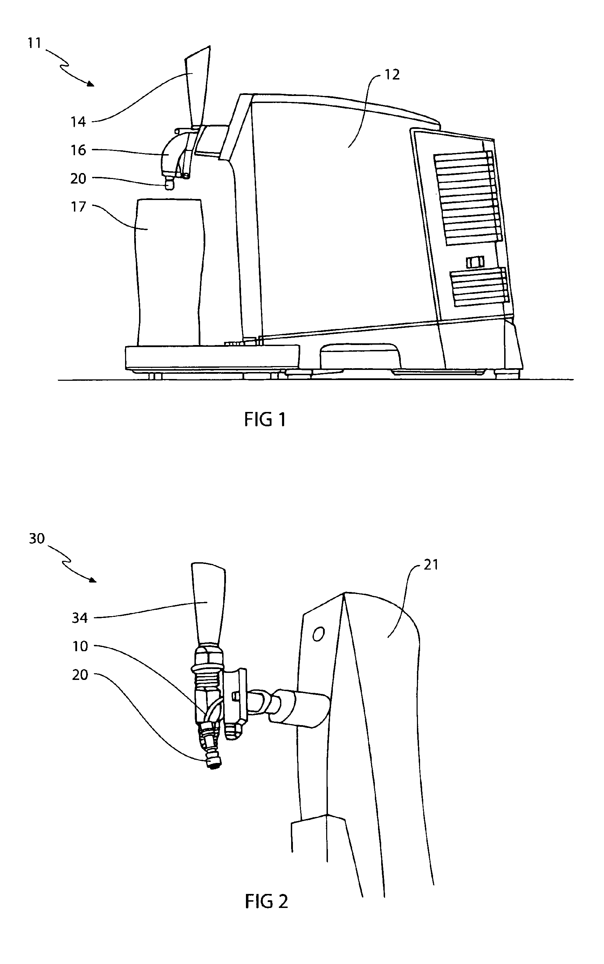

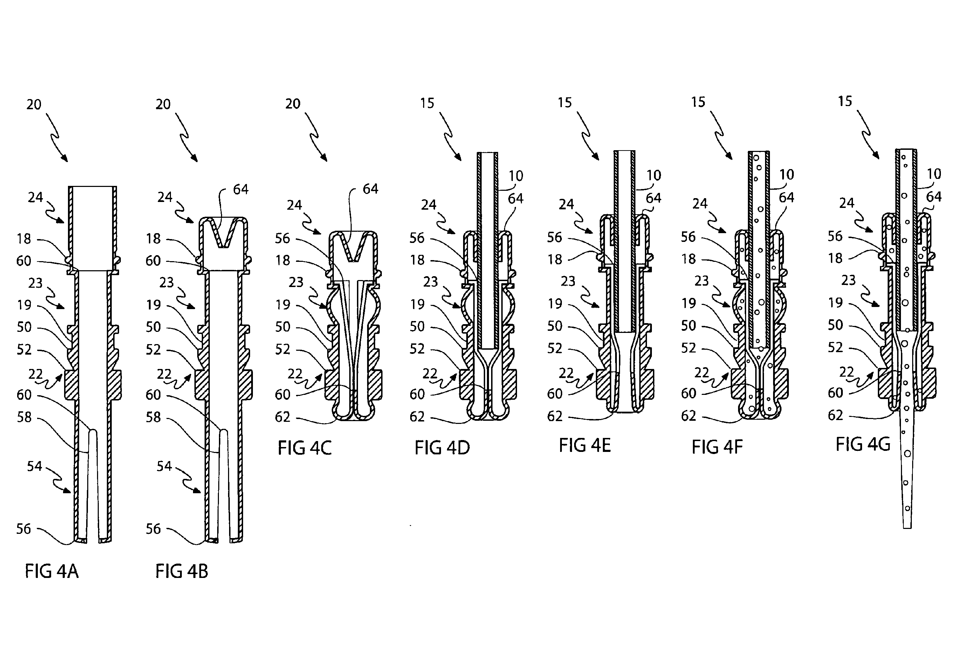

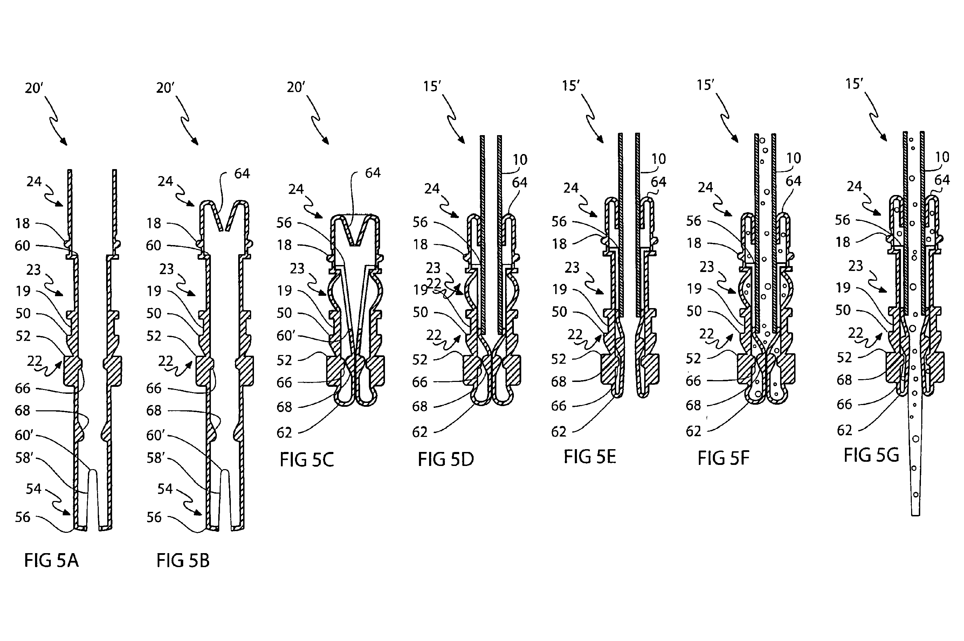

Fig. 1 illustrates a prior art drink dispenser assembly known from among others WO 04/099060, WO 07/019848, WO 07/019849, WO 07/019850 and WO 07/019851. The drink dispenser assembly 11 comprises a housing 12 including a chill chamber in which a keg, not shown in the drawings, containing carbonated beer is placed. The keg containing carbonated beer comprises a flexible bottle or bag containing the carbonated beer. The flexible bottle or bag is connected through a dispensing line to a valve element at the dispensing end of the dispensing line. By means of a dispensing head 16 and a tap handle 14, the valve element is operated between a closed position and an open position for dispensing beer into a glass 17 through a dispensing valve 20 according to the present invention and to be described in greater details below with reference to Figs. 4a-4g and Figs. 5a-5g as described in among others the above-mentioned WO references.

Fig. 2 illustrates a tapping rod 21 having a dispensing head 30 and a beverage dispensing assembly 15 of a dispensing line 10 and the valve element 20. The dispensing line 10 is received in the interior of the dispensing head 30 of the tapping rod 21, and the valve element 20 is shown freely suspended at the outer free end of the dispensing line 10 ready to be properly positioned in the dispensing head 30.

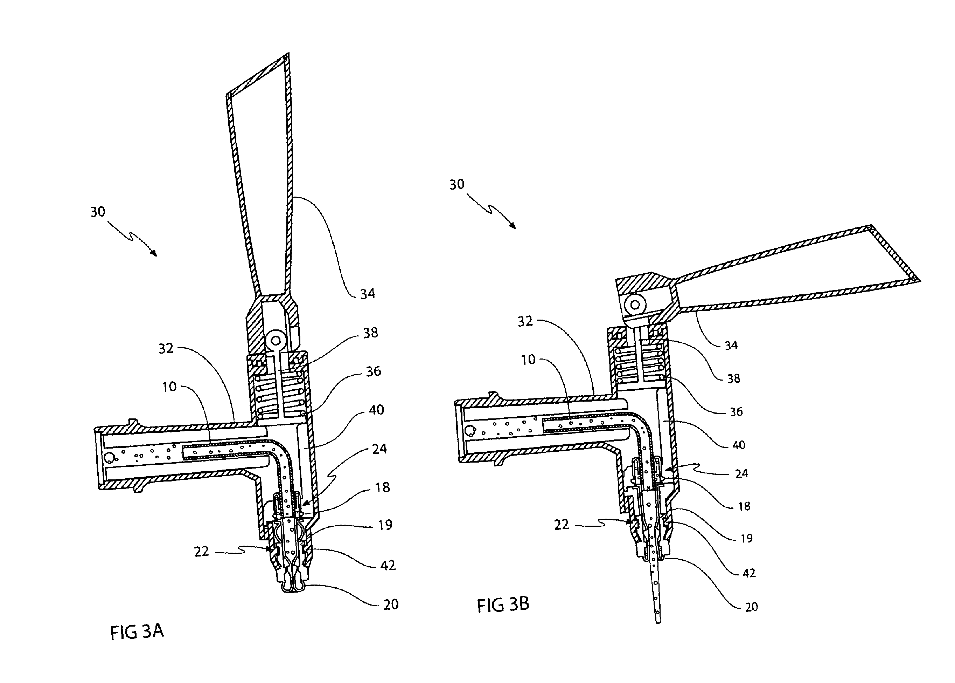

In Figs. 3a and 3b, the tapping head 30 is shown comprising a tapping head housing 32 defining a right angular bend in which the dispensing line 10 is received. The tapping head 30 further comprises a tap handle 34 extending upwardly from the tapping head housing 32 and is biased to two alternative positions by means of a biasing spring 36 to a first position shown in Fig. 3a in which the tap handle 34 is in an upright position in which the beverage dispensing assembly is closed and a second position shown in Fig. 3b in which the tap handle 34 is turned to the right or lowered as a conventional tap handle of a beverage dispensing system for opening the beverage dispensing assembly for causing the dispensing of beverage from the dispensing line 10. The tap handle 34 cooperates with a stem 38 acting on a sleeve 40 which catches with an outer circumferential flange 18 of an upper part 24 of the valve element 20 to be described in greater details below with reference to Figs. 4a-4g and Figs. 5a-5g for causing the upper part 24 of the valve element 20 to be raised to the position shown in Fig. 3b as the tap handle 34 is lowered from the upward position shown in Fig. 3a to the above described second position turned to the right as a lower part 22 of the valve element 20 is arrested relative to the tapping head house 32 by means of a circumferential flange 42 of the housing 32 catching into a circumferential groove 19 of the lower part 22 of the valve element 20. As the tap handle 34 is raised from the lowered position shown in Fig. 3b, the sleeve 22 causes the upper part 24 of the valve element 20 into the closed position shown in Fig. 3a.

Provided the valve element is a separate element separated from the dispensing line 10 and intended to be connected to and joined with the dispensing line 10, the opening and closing operation of the tap handle 34 is also used for interconnecting the dispensing line 10 and the valve element 20 as initially, the valve element 20 is positioned in the lowermost end of the right angular bend tapping head housing 32 and fixated by the circumferential flange 42 described above, catching in the groove 19 and at the same time, the dispensing line 10 is introduced through the tapping head housing 32 from the left hand side of the tapping head housing 32 and positioned in engagement with the sleeve 40 as the sleeve is raised by lowering the tap handle 34 from the position shown in Fig. 3a to the position shown in Fig. 3b. The dispensing line 10 and the valve element 20 are fitted together while the tap handle 34 is in the position shown in Fig. 3b, and the tap handle 34 is then raised to its upright position shown in Fig. 3a causing the dispensing line 10 and the valve element 20 to be permanently connected.

In Figs. 4a-4g, a technique of establishing the beverage dispensing assembly 15 from the dispensing line 10 and the valve element 20 is shown.

In Fig. 4a, a valve element blank 20 made from an elastic, flexible and bendable elastomeric material such as PU (polyurethane) or EPDM (ethylene propylene diene M-class rubber), preferably soft PU or soft EPDM, is illustrated comprising the above-mentioned lower valve part 22 including the circumferential groove 19 and the above-mentioned upper valve part 24, including the outwardly protruding circumferential flange 18. As described above, the circumferential groove 19 is to be arrested stationary in the tapping head 30 shown in Fig. 3a and 3b whereas the circumferential flange 18 is received in the vertically movable sleeve 40. The lower valve part 22 and the upper valve part 24 are joined by a flexible wall part 23.

The circumferential groove 19 is established in a circumferential wall part 50 having an increased wall thickness as compared to the wall part 23 in order to prevent the wall part 50 from flexing and limiting the flexing of the parts 22, 23 and 24 to the wall part 23. Below the wall part 50, a further circumferential flange 52 is provided, below which a hose-like extension of the valve element blank 20 extends which extension is designated the reference numeral 54 and is at its lower end provided with an inwardly extending circumferential flange 56. In the hose-like extension 54, a number of slits are provided, one of which is shown and designated the reference numeral 58. The slit 58 extends to a specific end 60, the importance of which will be described in greater details below. The valve element blank 20 shown in Fig. 4a is cast in an integral process and constitutes a unitary structure from which a integral valve element is produced including an integral pinch-off valve serving to be opened while the lowering of the tap handle 34 as shown in Fig. 3b from the upright position of the tap handle 34 as shown in Fig. 3a.

The first step of producing the valve element from the valve element blank 20 shown in Fig. 4a involves the step shown in Fig. 4b of everting the outermost end of the top valve part 24 for providing an inwardly sloping conical surface 64.

In a further step shown in Fig. 4c, the tube-like extension 54 of the valve element blank 20 shown in Fig. 4b is everted into an outer part of the valve element, which outer part is constituted by the lower valve part 22, the wall part 23 and the upper valve part 24. The everted hose-like extension 54 constitutes an inner part of the valve element shown in its final state in Fig. 4c, in which the inwardly protruding circumferential flange 56 is resting on and catching behind an inwardly protruding flange 60 at the junction between the wall part 23 and the upper valve part 24. Due to the flexibility and the elasticity of the hose-like extension 54 of the valve element blank 20, an annular end surface 62 is provided below the wall part 52 and joining the above described upper valve part of the valve element 20 to the inner part of the valve element 20 and establishing at the lower end of the inner part of the valve element 20 a closure or pinch-off sealing. The end 60 of the slit 58 is further shown in Fig. 4c establishing communication from within the valve element 20 to a pocket defined between the inner surface of the outer valve part constituted by the parts 22, 23 and 24 and the interior of the valve element 20. In the process of everting the hose-like extension 54 of the valve element blank 20 into its everted position shown in Fig. 4c, in which the hose-like extension establishes an inner part of the final valve element, the wall part 23 is caused to be compressed providing a bellow-like configuration serving as a biasing element attempting to elongate the outer valve part in order to regain its original relaxed and uncompressed state as is illustrated in Figs. 4a and 4c.

In Fig. 4d, the dispensing line 10 is inserted into the interior of the valve element 20 shown in Fig. 4c and fitting within the sloping conical surface 64 and further tightly fitting within the inner part of the valve element 20, i.e. tightly fitting within the everted hose-like extension 54, possibly further fixated to the valve element 20 through welding or gluing the dispensing line 10 to the valve element 20. In Fig. 4d, the beverage dispensing assembly 15 is ready for use and may be received within the tapping head 30 as is illustrated in Figs. 3a and 3b.

Fig. 4e illustrates the valve element 20 in its open position in which the outer part of the valve element 20 is elongated as the wall part 23 is stretched from its bellow-like configuration shown in Figs. 4c and 4d to its original configuration shown in Figs. 4a and 4b, and at the same time pulling in the end wall 62 into the interior of the wall element 20 due to the elongation or stretching of the outer part as compared to the inner part of the valve element.

In Figs. 4f and 4g, the valve element 20 and the dispensing line 10 of the beverage dispensing assembly 15 is shown in the closed and the open position similar to the positions shown in Figs. 4d and 4e, respectively, however, after the beverage dispensing assembly 15 has been connected to a beverage container or a keg as the interior of the dispensing line 10 and also the interior of the valve element 20 are filled with beverage filling out the interior pockets within the surface 64 originating from the inwardly sloping conical surface 64 shown in Fig. 4b and further filling out the space between the inner part of the valve element 20 constituted by the everted tube-like extension 54 of the valve element 20 and the outer part constituted by the lower valve part 22, the wall part 23 and the upper valve part 24 as the space between the inner part and the outer part are communicating with one another through the aperture 60. Due to the communication through the apertures 60, the fluid pressure within the pockets behind the end surface 62 is identical to the pressure with the interior of the valve and the dispensing line 10, and for this reason, the pinch-off sealing pressure need not to exceed the pressure within the beverage dispensing line 10, but only need to be sufficient for contacting the surfaces of the everted tube-like extension 54 within the interior of the valve element 20.

As is evident from Fig. 4g, the space between the inner part of the valve element 20 and the outer part of the valve element 20 is reduced as the outer part of the valve element is elongated by the stretching of the wall part 23 from the bellow-like configuration shown in Fig. 4f to the straight circular cylindrical configuration shown in Fig. 4g and consequently forces out the beverage originally present in the pockets behind the end surface 62 through the apertures 60.

In Figs. 5a-5f, a modified variant of the above described first embodiment of the integrally cast and unitary elastomeric valve element according to the present invention or a second embodiment of the integrally cast and unitary elastomeric valve element according to the present invention is shown designated the reference numeral 20' in its entirety. The Figs. 5a-5f all correspond one to one with the Figs. 4a-4f and no additional description of the elements previously described with reference to Figs. 4a -4f is presented. The second embodiment of the valve element 20' differs from the above described first embodiment 20 in that the slits, one of which is shown in Figs. 4a and 4b and designated the reference numeral 58 are substituted by slits, one of which is shown in Figs. 5a and 5b and designated the reference numeral 58' having a somewhat reduced length as compared to the lengths of the slits shown in Figs. 4a and 4b. The end 60' of the slit 58' consequently is located at a lower position in the hose-like extension 54 of the second embodiment of the valve element 20' as compared to the position of the end 60 of the slit 58 shown in Figs. 4a and 4b. In addition, the second embodiment of the valve 20' shown in Figs. 5a-5b has a further sealing feature provided by cooperating circumferential beads of the lower valve part 22 and the inner part of the valve element 20' provided by the everted hose-like extension 54.

In Figs. 5a and 5b, a circumferential bead 66 is provided at the inner surface of the hose-like extension 54 located somewhat above the end 60' of the slit 58'. In addition, an inwardly protruding circumferential bead 68 is provided behind the circumferential flange 52 serving to cooperate with the circumferential bead 66 of the hose-like extension 54 as is evident from Fig. 5c-5g.

In Fig. 5c, the final valve element 20' is shown having the everted hose-like extension 54 positioned within the interior outer wall part constituted by the lower valve part 22, the wall part 23 and the upper valve part 24. In the position shown in Figs. 5c, 5d and 5f, the circumferential bead 66 of the hose-like extension 54 is turned into the space defined between the inner part of the valve element 20' and the outer part of the valve element 20' through the eversion of the hose-like extension 54 and are positioned firmly fitting between and pressed against the circumferential bead 68 providing a tight seal of the inner passage through the valve element 20'. From Figs. 5c and 5d it is further evident that the communicating aperture 60' of the valve element 20' is positioned above the circumferential, closing or sealing bead 66 due to the reduced length of the slits 58.

It is contemplated that the cooperating circumferential beads 66 and 68 provide a tight sealing of the valve element and consequently of a safe and reliable closing off of the beverage dispensing assembly 15 comprising the valve element 20' and the dispensing line 10. It is further contemplated that the sealing of the valve element 20' as is shown in Figs. 5c and 5d by the cooperating circumferential beads 66 and 68 is functioning in addition to or in substitution for the pinch-off sealing provided by the wall of the everted hose-like extension 54 as described above with reference to Figs. 4a-4f.

The opening of the valve element 20', and consequently the beverage dispensing assembly 15 is illustrated in Figs. 5e and 5g as the elongation of the outer part of the valve element 20' causes the inwardly protruding circumferential bead 68 of the circumferential flange 52 of the lower valve part 62 to be shifted downwardly and to be disengaged from its sealing-off engagement with the circumferential bead 66 allowing the dispensing of beverage through the dispensing line 10 and the valve element 20' of the beverage dispensing assembly 15 as at the same time, the annular end surface 62 is turned into contact with the inner surface of the lower valve part 22 below the inwardly protruding circumferential bead 68 as described above with reference to Figs. 4e and 4g.

Although the present invention has been described above with reference to advantageous and presently preferred embodiments of the different aspects of the invention, numerous modifications and changes of the above described presently preferred embodiments may be deduced and all such modifications and changes perceivable by a person having ordinary skill in the art are consequently to be considered part of the present invention, the protective scope of which is to be interpreted in accordance with the below patent claims.

## Claims

1. A valve element of a beverage dispensing assembly to be used in combination with a tapping head including a tapping head housing and a tap handle operable between a first position and a second position, said first position constituting a non-beverage dispensing position and said second position constituting a beverage dispensing position, said beverage dispensing assembly comprising two elements:
i) a dispensing line having a dispensing end and a keg connection end, and
ii) a valve element to be positioned and received in said tapping head housing and operated by said tap handle for causing said valve element to be closed in said first position of said tap handle and to be opened in said second position,
said valve element being constituted by an integrally cast and unitary elastomeric element comprising an outer part and an inner part, said inner part defining a through-going inner passage communicating with said dispensing line for allowing the dispensing of beverage in said second position of said tap handle, said outer part and said inner part defining a space therebetween communicating with said dispensing line and being sealed off by a flexible end wall circumferentially encircling said inner passage and joining said outer part and said inner part together,
said outer part having an elastically deformable wall part allowing said outer part to be elongated when shifting said tap handle between said first position and said second position,
said flexible end wall forcing said inner part to seal off said inner passage in said second position of said tap handle, and
said flexible end wall being bent into contact with an inner surface of said outer part in said second position of said tap handle for causing said inner passage to be opened by elongating said outer part and causing said inner volume of said inner space to be substantially reduced as compared to the inner volume of said inner space in said second position of said tap handle.

2. A valve element of a beverage dispensing assembly to be used in combination with a tapping head including a tapping head housing and a tap handle operable between a first position and a second position, said first position constituting a non-beverage dispensing position and said second position constituting a beverage dispensing position, said beverage dispensing assembly comprising two elements:
i) a dispensing line having a dispensing end and a keg connection end, and
ii) a valve element to be positioned and received in said tapping head housing and operated by said tap handle for causing said valve element to be closed in said first position of said tap handle and to be opened in said second position,
said valve element being constituted by an integrally cast and unitary elastomeric element comprising an outer part and an inner part, said inner part defining a through-going inner passage communicating with said dispensing line for allowing the dispensing of beverage in said second position of said tap handle, said outer part and said inner part defining a space therebetween communicating with said dispensing line and being sealed off by a flexible end wall circumferentially encircling said inner passage and joining said outer part and said inner part together,
said outer part having an elastically deformable wall part allowing said outer part to be elongated when shifting said tap handle between said first position and said second position, and
said outer part having an inner circumferential bead located in said space, said inner part having an outer circumferential bead located in said space for cooperating with said inner circumferential bead for elastically deforming said inner part into sealing off said inner passage in said first position of said tap handle and for causing said inner passage to be opened by elongating said outer part and separating said inner and outer circumferential beads from one another in said second position of said tap handle.

3. The valve element according to claim 1, said valve element being joined to said dispensing line prior to positioning said valve element in said tapping head.

4. The valve element according to claim 1, said valve element constituting, prior to positioning said valve element in said tapping head housing, a separate element separated from said dispensing line, said dispensing line being sealed at said dispensing end by a sealing closure prior to positioning said valve element in said tapping head housing, and said dispensing line and said valve element, when positioning said valve element in said tapping head housing being connected together by operating said tap handle from said first position to said second position causing said sealing closure and said dispensing end of said dispensing line to be opened and at the same time causing said dispensing line to be irreversibly joined to and arrested relative to said valve element.

5. The valve element according ot any of the claims 1-4, said outer part and said inner part being initially cast in an elongated configuration in which said outer part and said inner part are joined through said flexible wall and being converted into said valve element through eversion of said inner part into said outer part.

6. The valve element according to any of the claims 1-5, said elastically deformable wall part of said outer part biasing said valve element to said second position of said tap handle by elastically bending said elastically deformable wall part and being stretched when shifting said tap handle from said first position to said second position.

7. The valve element according to any of the claims 1-5, said elastically deformable wall part of said outer part biasing said valve element to said first position and being elastically elongated when shifting said tap handle from said first position to said second position.

8. The valve element according to any of the claims 1-5, said elastically deformable wall part of said outer part biasing said valve element to said first position by elastically bending said elastically deformable wall part and being stretched when shifting said tap handle from said second position to said first position.

9. The valve element according to any of the claims 2-8, said elastically deformable wall part of said outer part biasing said valve element to said first position and being elastically stretched when shifting said tap handle from said first position to said second position.

10. The valve element according to any of the claims 2-9, said flexible end wall assisting in sealing off said inner passage when said tap handle is in said first position and being bent into contact with an inner surface of said outer part when said tap handle is in said second position causing said inner volume of said inner space to be substantially reduced as compared to said inner volume of said inner space when said tap handle is in said first position.

11. The valve element according to claim 4, said sealing closure constituted by an initially biased membrane.

12. The valve element according to claim 11, said membrane being rupturable.

13. A dispensing line to be used in combination with and to be joined to and arrested relative to said valve element according to claim 1, 2 or any of the claims 4-12 and having a dispensing end and a keg connection end, said dispensing line being provided at said dispensing with a biased, rupturable sealing closure.

14. The dispensing line according to claim 13, said sealing closure constituted by a biased membrane.

15. The dispensing line according to any of the preceding claims being said dispensing line being made of an elastomeric material.

16. A blank for the manufacture of a valve element according to any of the claims 1-15, said blank being cast in an elongated configuration comprising a first part and a second part joined through a flexible wall, said first part constituting said outer part of said valve element and said second part constituting said inner part of said valve element and said blank being converted into said valve element by everting said first part into said second part.

17. A method of producing a blank for the manufacture of a valve element according to any of the claims 1-15, the method comprising the step of casting said blank in an elongated configuration comprising a first part and a second part joined through a flexible wall, said first part constituting said outer part of said valve element and said second part constituting said inner part of said valve element.

18. The method of producing a valve element from a blank according to claim 16 and produced according to the method according to claim 17, the method comprising the step of converting said blank into said valve element through everting said first part into said second part.

19. A beverage dispensing assembly comprising a dispensing line and a valve element according to any of the claims 1-12.
